# EUROPEAN PATENT APPLICATION

(11) **EP 4 431 894 A1**
(43) Date of publication of application: **18.09.2024**
(21) Application number: 24163041.7
(22) Date of filing: 12.03.2024
(51) Int. Cl.: G01L 1/22

(54) **STRAIN GAUGE COMPONENT, LOAD CELL, AND METHOD FOR MANUFACTURING LOAD CELL**

(30) Priority: 17.03.2023 JP 2023042982
(71) Applicant: Ishida Co., Ltd., Kyoto-shi Kyoto 606-8392 (JP)
(72) Inventor: ARIMITSU, Yukiya, Ritto-shi, Shiga, 520-3026 (JP); TAKEICHI, Shinji, Ritto-shi, Shiga, 520-3026 (JP)
(74) Representative: Global IP Europe Patentanwaltskanzlei

(57) **Abstract**

A strain gauge component 1 includes: a strain gauge 2 including an insulator 4 having an insulating property and a resistor 5 disposed on the insulator 4 and having an electric resistance value varying with deformation of a strain body 102; and a substrate 3 on which the insulator 4 of the strain gauge 2 is disposed, and the substrate 3 is formed of a metal containing aluminum or stainless steel having the same properties as the strain body 102.

## Description

### TECHNICAL FIELD

The present disclosure relates to a strain gauge component, a load cell, and a method for manufacturing the load cell.

### BACKGROUND

A strain gauge includes an insulating base (insulator) attached to a strain body, and a resistor attached to the base and having an electric resistance value varying according to a degree of change of the strain body (see, for example, Japanese Unexamined Patent Publication No. 2020-148658).

### SUMMARY

The strain gauge has a temperature characteristic (a resistance temperature coefficient). The strain gauge changes in the temperature characteristic before being attached (joined) to the strain body and after being attached to the strain body. Therefore, even if the temperature characteristic of a plurality of strain gauges are obtained before being attached to the strain body and the plurality of strain gauges having the same temperature characteristic are attached to the strain body, the temperature characteristic of the plurality of strain gauges after being attached to the strain body are not necessarily equivalent, and the temperature characteristic may vary in the plurality of strain gauges. Therefore, in a conventional load cell manufacturing process, after the plurality of strain gauges are attached to the strain body, the temperature characteristic of the plurality of strain gauges are measured, and a primary component and a secondary component in temperature dependence of an output voltage are corrected to compensate for the temperature characteristic.

As described above, in the conventional load cell manufacturing process, a step of compensating for the temperature characteristic is required after the strain gauge is attached to the strain body. Therefore, it has been taken time and effort to manufacture a load cell having excellent temperature characteristic.

An object of one aspect of the present disclosure is to provide a strain gauge component, a load cell, and a method for manufacturing the load cell, which can simplify a manufacturing process of a load cell having excellent temperature characteristic.
(1) A strain gauge component according to one aspect of the present invention is a strain gauge component attached to a strain body that deforms when a load is applied to the strain body, the strain gauge component including: a strain gauge including an insulator having an insulating property and a resistor disposed on the insulator and having an electric resistance value varying with deformation of the strain body; and a substrate on which the insulator of the strain gauge is disposed, in which the substrate is formed of a metal containing aluminum or stainless steel having the same properties as the strain body.

In the strain gauge component according to one aspect of the present invention, the substrate on which the strain gauge is disposed is formed of a metal containing aluminum or stainless steel having the same properties as the strain body. As described above, in the strain gauge component, since the strain gauge is disposed on the substrate formed of a metal having the same properties as the strain body, a change in temperature characteristic is small before and after the strain gauge component is attached to the strain body. Therefore, by obtaining the temperature characteristic of the strain gauge is obtained, and for example, selecting a plurality of strain gauge components having the same temperature characteristic (the resistance temperature coefficient is within a predetermined range) and attaching them to the strain body, the temperature characteristic of the strain gauge in the load cell can be equivalent. Thus, in the manufacturing process of the load cell, a step for compensating for temperature influence on zero point can be omitted. Therefore, the strain gauge component can simplify the manufacturing process of the load cell having excellent temperature characteristic.

(2) In the strain gauge component of the above (1), the insulator or the substrate may be provided with information capable of obtaining information on temperature characteristic of the strain gauge. In this configuration, the temperature characteristic of the strain gauge component can be easily obtained and checked (recognized). Therefore, for example, it is possible to easily select the plurality of strain gauge components having the same temperature characteristic and attach them to the load cell. In addition, a robot or the like can obtain the above information of the strain gauge component with a camera or the like, and the robot can select a plurality of appropriate strain gauge components on the basis of the information and attach them to the strain body. Therefore, manufacturing of the load cell can be automated.

(3) In the strain gauge component of the above (1) or (2), the strain gauge component may further include a bonding portion disposed between the insulator and the substrate and cured by heat treatment. In the strain gauge component, the bonding portion for bonding the insulator and the substrate is cured by heat treatment, that is, the strain gauge component has already been subjected to heat treatment. By including the heat-treated bonding portion, it is possible to suppress a change in the temperature characteristic of the strain gauge in the strain gauge component.

(4) A load cell according to one aspect of the present invention includes: the strain gauge component according to any one of the above (1) to (3); and a strain body to which the strain gauge component is attached, the strain body being formed of a metal containing aluminum or stainless steel and deforming when a load is applied to the strain body.

The load cell according to one aspect of the present invention includes the strain gauge component. Therefore, in the load cell, the manufacturing process of the load cell having excellent temperature characteristic can be simplified.

(5) In the load cell of the above (4), the strain body may have a recess in which the substrate is accommodated at a position where the strain gauge component is disposed. In this configuration, the strain gauge component can be easily attached in the strain body.

(6) In the load cell of the above (4), the strain body may have an opening that opens toward the substrate at a position where the strain gauge component is disposed. When there is a portion where the strain body and the substrate are not sufficiently joined between the strain body and the substrate, friction may occur in the portion. When the friction occurs between the strain body and the substrate, the deformation of the strain body is not accurately reflected on the resistor, which affects an output of the resistor, and accurate measurement may not be performed. In the load cell, the substrate of the strain gauge component is disposed across the opening. Thus, a joint area between the strain body and the substrate is reduced, so that the portion where the strain body and the substrate are not sufficiently joined can be reduced (eliminated). Therefore, in the load cell, it is possible to suppress occurrence of the friction between the strain body and the substrate, so that the accurate measurement can be performed.

(7) In the load cell of any one of the above (4) to (6), a plurality of strain gauge components may be attached to the strain body, and a difference in resistance temperature coefficient of the plurality of strain gauge components may be 0.5 ppm/°C. In this configuration, the load cell having excellent temperature characteristic can be obtained.

(8) A method for manufacturing a load cell according to one aspect of the present invention, the load cell including: a strain gauge including an insulator having an insulating property and a resistor disposed on the insulator and having an electric resistance value varying with deformation of a strain body when a load is applied to the strain body; a substrate formed of a metal containing aluminum or stainless steel; and a strain body that is deformed when a load is applied to the strain body and is formed of a metal containing aluminum or stainless steel having the same properties as the substrate, the method including: bonding the strain gauge to the substrate to produce a strain gauge component; heating the strain gauge component; and joining the strain gauge component to the strain body.

In the method for manufacturing the load cell according to one aspect of the present invention, the substrate on which the strain gauge is disposed is formed of the metal containing aluminum or stainless steel having the same properties as the strain body. As described above, in the strain gauge component manufactured by the method for manufacturing the load cell, since the strain gauge is disposed on the substrate formed of the metal having the same properties as the strain body, the change in the temperature characteristic is small before and after the strain gauge component is attached to the strain body. Therefore, by obtaining the temperature characteristic of the strain gauge is obtained, and for example, selecting a plurality of strain gauge components having the same temperature characteristic (the resistance temperature coefficient is within a predetermined range) and attaching them to the strain body, the temperature characteristic of the strain gauge in the load cell can be equivalent. Thus, in the manufacturing process of the load cell, a step for compensating for temperature influence on zero point can be omitted. Therefore, in the method for manufacturing the load cell, it is possible to simplify the manufacturing process of the load cell having excellent temperature characteristic.

According to one aspect of the present invention, it is possible to simplify the manufacturing process of the load cell having excellent temperature characteristic.

### BRIEF DESCRIPTION OF THE DRAWINGS

FIG. 1 is a perspective view of a strain gauge component according to an embodiment;
FIG. 2 is a plan view of the strain gauge component;
FIG. 3 is a view illustrating a cross-sectional configuration taken along line III-III in FIG. 2;
FIG. 4 is a front view of a load cell;
FIG. 5 is a perspective view of the load cell;
FIG. 6 is a view illustrating the strain gauge component attached to a strain body;
FIG. 7 is a perspective view of a load cell according to another embodiment; and
FIGS. 8A and 8B are perspective views of a strain gauge component according to another embodiment.

### DETAILED DESCRIPTION

Hereinafter, preferred embodiments of the present invention will be described in detail with reference to the accompanying drawings. Note that in description of the drawings, the same or equivalent elements are denoted by the same reference numerals, and redundant description will be omitted.

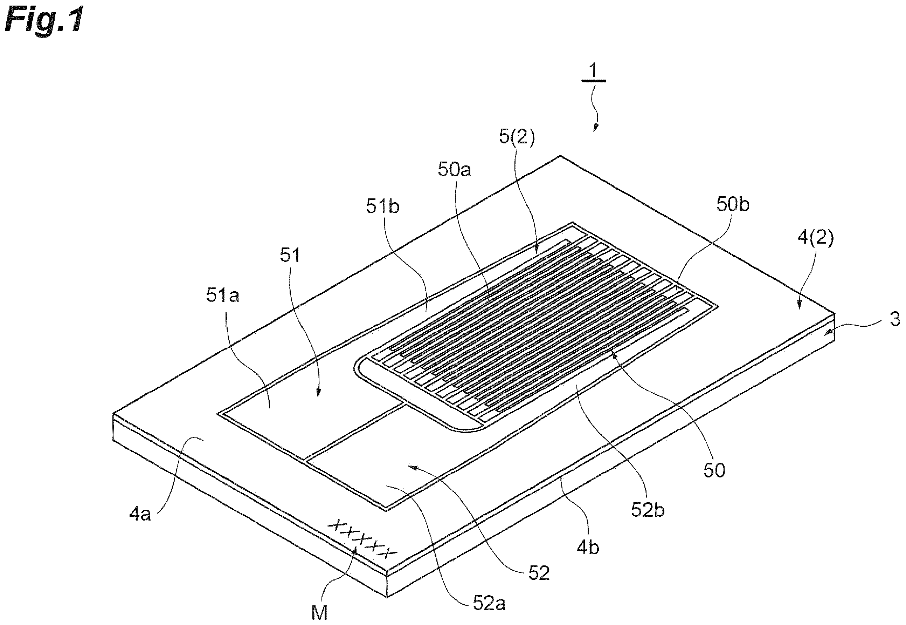

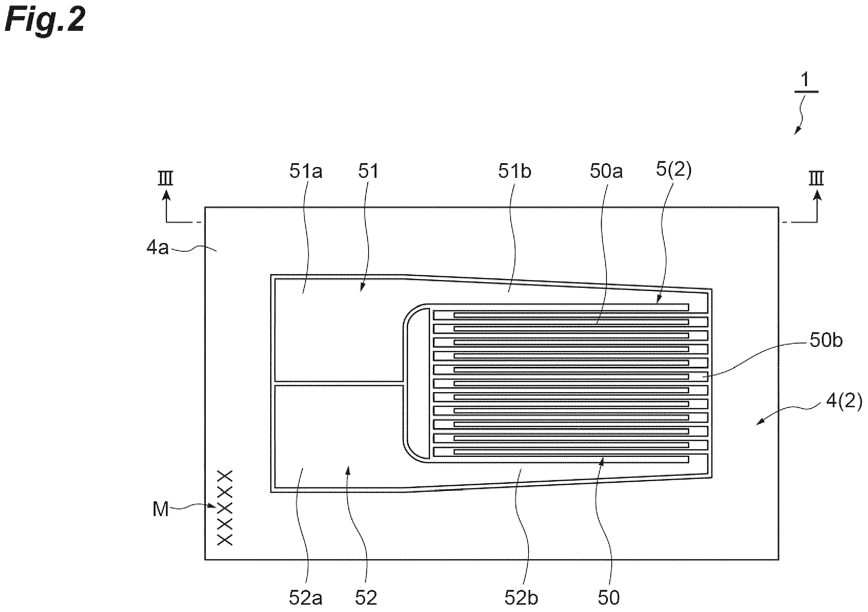

FIG. 1 is a perspective view illustrating a strain gauge component according to an embodiment. FIG. 2 is a plan view of the strain gauge component. As illustrated in FIGS. 1 and 2, a strain gauge component 1 includes a strain gauge 2 and a substrate 3.

The strain gauge 2 includes an insulator 4, a resistor 5, and a bonding portion 6.

The insulator 4 supports the resistor 5. The insulator 4 has, for example, a rectangular shape. The insulator 4 has a pair of main surfaces 4a and 4b facing each other. The insulator 4 has electrical insulation. The insulator 4 is, for example, polyimide. The polyimide is preferably, for example, a polymer classified as an aromatic polyester from the viewpoint of molecular structure. A thickness of the insulator 4 is, for example, 10 µm to 50 µm.

The insulator 4 is provided with characteristic information M. In the present embodiment, the characteristic information M is provided on the main surface 4a of the insulator 4. The characteristic information M is provided, for example, at an end of the main surface 4a. The characteristic information M may be provided by being printed on the main surface 4a of the insulator 4, or may be provided by attaching a seal or the like on which the characteristic information M is printed on the main surface 4a. A size and arrangement position of the characteristic information M are not limited.

The characteristic information M is information capable of obtaining information on a temperature characteristic of the strain gauge component 1. The characteristic information M may be a measured value of the temperature characteristic, an identification character, a barcode (a one-dimensional code or a two-dimensional code), or the like. The identification character may be a letter, a number, a symbol, or a combination thereof. The identification character is associated with the measured value of the temperature characteristic of the strain gauge component 1. The barcode is associated with the measured value of the temperature characteristic of the strain gauge component 1. By checking the identification character or reading the barcode, the temperature characteristic of the strain gauge component 1 can be obtained. For example, when the characteristic information M of the strain gauge component 1 is the identification character, the identification character is input to a terminal (for example, a smartphone, a tablet, or the like) or imaged by a camera of the terminal. The terminal extracts (obtains) the temperature characteristic associated with the obtained identification character from a database or the like, and displays the temperature characteristic.

The resistor 5 is disposed on the main surface 4a of the insulator 4. The resistor 5 is fixed to the insulator 4. The resistor 5 expands and contracts as the insulator 4 deforms. An electric resistance value of the resistor 5 changes by expansion and contraction. The resistor 5 has conductivity. The resistor 5 is formed of a metal material. As the metal material, for example, Cu-Ni or the like can be used. The resistor 5 can be formed on the main surface 4a of the insulator 4 by, for example, a photolithography method. A thickness of the resistor 5 is, for example, 2 µm to 5 µm.

The resistor 5 includes a sensing portion 50, a first connecting portion 51, and a second connecting portion 52. In the resistor 5, the sensing portion 50, the first connecting portion 51, and the second connecting portion 52 are integrally formed.

The sensing portion 50 is a portion where the resistance value mainly changes with deformation of the insulator 4. The sensing portion 50 includes a straight portion 50a and a folded portion 50b. The straight portion 50a linearly extends in one direction. A plurality of the straight portions 50a are arranged in parallel in a direction intersecting the one direction. The folded portion 50b connects ends of adjacent straight portions 50a. The sensing portion 50 has a meandering shape due to the plurality of straight portions 50a and the plurality of folded portions 50b.

The first connecting portion 51 is connected to one end of the sensing portion 50. Wiring (not illustrated) to an external circuit is connected to the first connecting portion 51. The first connecting portion 51 has a connecting portion 51a and a coupling portion 51b. The connecting portion 51a is a portion to which the wiring is connected. The coupling portion 51b couples one end of the sensing portion 50 and the connecting portion 51a.

The second connecting portion 52 is connected to the other end of the sensing portion 50. Wiring (not illustrated) to the external circuit is connected to the second connecting portion 52. The second connecting portion 52 has a connecting portion 52a and a coupling portion 52b. The connecting portion 52a is a portion to which the wiring is connected. The coupling portion 52b couples the other end of the sensing portion 50 and the connecting portion 52a.

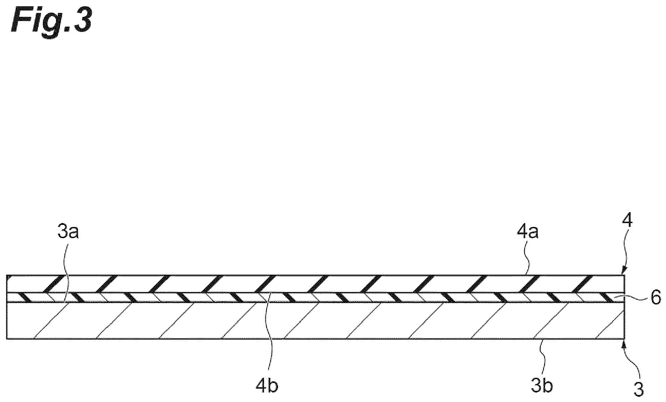

FIG. 3 is a view illustrating a cross-sectional configuration taken along line III-III in FIG. 2. As illustrated in FIG. 3, the bonding portion 6 is disposed between the insulator 4 and the substrate 3. Specifically, the bonding portion 6 is disposed between the main surface 4b of the insulator 4 and the main surface 3a of the substrate 3. The bonding portion 6 bonds (joins) the insulator 4 and the substrate 3. The bonding portion 6 is formed by curing a thermosetting adhesive by heat treatment. Examples of the thermosetting adhesive include an epoxy-based adhesive.

The strain gauge 2 may include a cover (not illustrated). The cover covers the main surface 4a of the insulator 4 and the resistor 5. As the cover, a composite film of Ta₂O₅ and SiN can be used.

As illustrated in FIG. 1, the substrate 3 supports the strain gauge 2 (the insulator 4). The substrate 3 is a plate-like member, and has, for example, a rectangular shape. In the present embodiment, the substrate 3 and the insulator 4 have the same shape. The substrate 3 has a pair of main surfaces 3a and 3b facing each other. In the present embodiment, the main surfaces 3a and 3b are flat surfaces.

The substrate 3 is formed of a metal containing aluminum or stainless steel having the same properties as a strain body 102 (described later). In the present embodiment, for example, the substrate 3 is formed of an aluminum alloy. The aluminum alloy is, for example, an aluminum alloy (Al-Cu-based alloy) of 2000 series defined by Japanese Industrial Standards (JIS). A thickness of the substrate 3 is larger than the thickness of the insulator 4. The thickness of the substrate 3 is, for example, 0.3 mm to 1.0 mm.

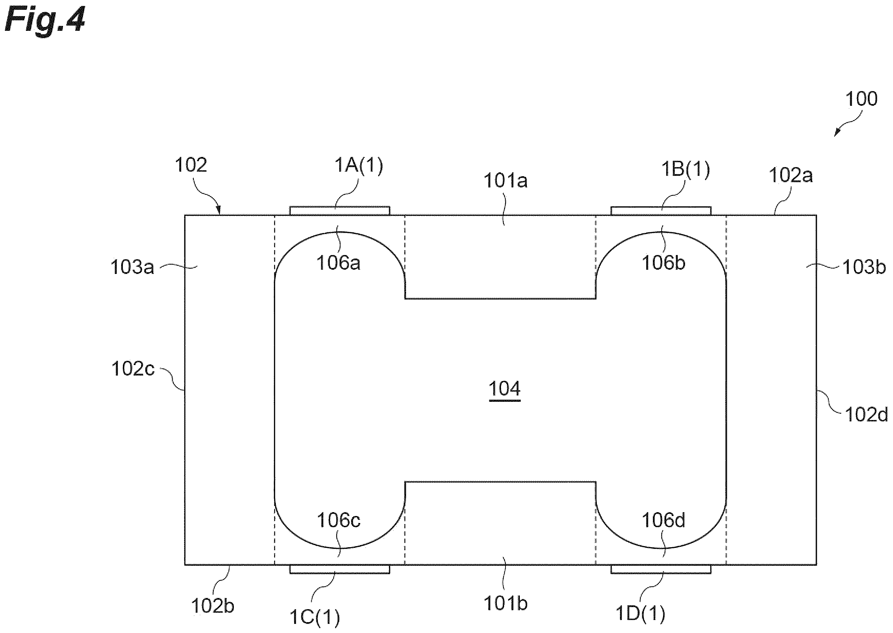

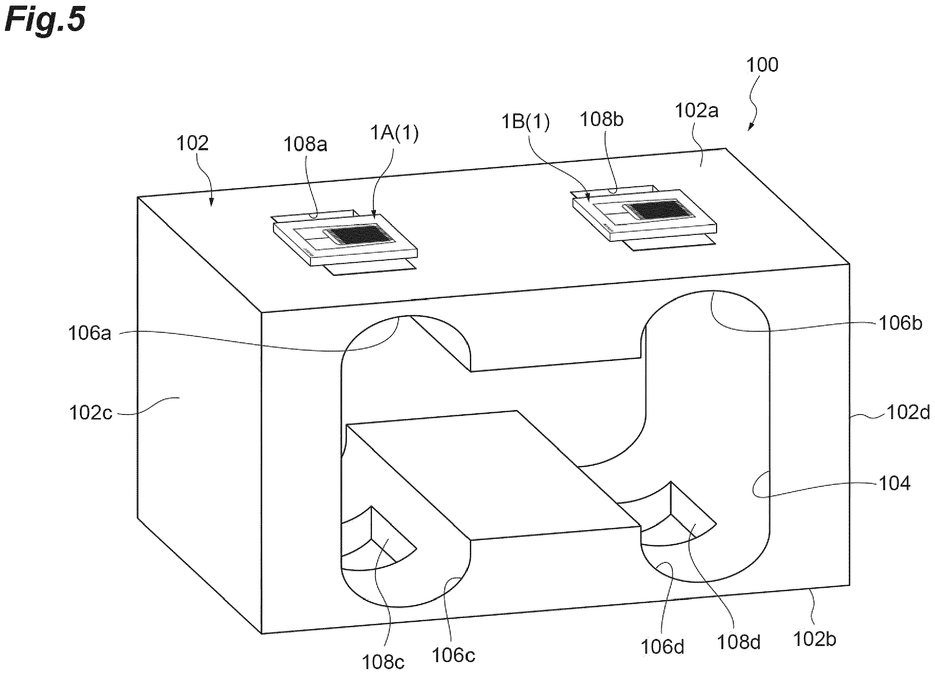

FIG. 4 is a front view illustrating a load cell. FIG. 5 is a perspective view of the load cell. As illustrated in FIGS. 4 and 5, a load cell 100 includes the strain gauge component 1 and the strain body 102. Note that although FIG. 4 illustrates strain gauge components 1A, 1B, 1C, and 1D in order to distinguish strain gauge components 1, configurations of the strain gauge components 1A, 1B, 1C, and 1D are the same as those of the strain gauge components 1.

The strain body 102 is a metal block having a rectangular parallelepiped shape. The strain body 102 has a Roberval shape (a parallelogram shape). The strain body 102 is an elastic body formed of a metal such as aluminum (an aluminum alloy) or stainless steel. The strain body 102 has a pair of main surfaces (not illustrated) and four side surfaces 102a, 102b, 102c, 102d connecting the main surfaces. In the strain body 102, for example, the side surface 102c is a fixed end fixed to a case such as a measuring device, and the side surface 102d is a free end to which a load is applied.

The strain body 102 is provided with a penetrating portion 104. The penetrating portion 104 is formed to penetrate the pair of main surfaces of the strain body 102. The penetrating portion 104 has a substantially H-shape.

The strain body 102 includes a first beam 101a, a second beam 101b, a fixed end 103a, a free end 103b, a first notch 106a, a second notch 106b, a third notch 106c, and a fourth notch 106d. The first beam 101a, the second beam 101b, the fixed end 103a, the free end 103b, the first notch 106a, the second notch 106b, the third notch 106c, and the fourth notch 106d form the penetrating portion 104.

The first beam 101a and the second beam 101b are provided at positions facing each other. The fixed end 103a and the free end 103b are provided at positions facing each other. The first notch 106a and the third notch 106c are provided at positions facing each other. The second notch 106b and the fourth notch 106d are provided at positions facing each other.

The first beam 101a constitutes a part of the side surface 102a. The second beam 101b constitutes a part of the side surface 102b. The fixed end 103a constitutes a part of the side surface 102a, a part of the side surface 102b, and the side surface 102c. The free end 103b constitutes a part of the side surface 102a, a part of the side surface 102b, and the side surface 102d. The first notch 106a, the second notch 106b, the third notch 106c, and the fourth notch 106d are thin portions in the strain body 102. The first notch 106a and the second notch 106b are portions between the side surface 102a and the penetrating portion 104. The third notch 106c and the fourth notch 106d are portions between the side surface 102b and the penetrating portion 104.

As illustrated in FIG. 5, the strain body 102 is provided with a first opening 108a, a second opening 108b, a third opening 108c, and a fourth opening 108d. The first opening 108a is disposed at a position corresponding to the first notch 106a, and is formed to penetrate the side surface 102a and an inner surface of the first notch 106a. The second opening 108b is disposed at a position corresponding to the second notch 106b, and is formed to penetrate the side surface 102a and an inner surface of the second notch 106b. The third opening 108c is disposed at a position corresponding to the third notch 106c, and is formed to penetrate the side surface 102b and an inner surface of the third notch 106c. The fourth opening 108d is disposed at a position corresponding to the fourth notch 106d, and is formed to penetrate the side surface 102b and an inner surface of the fourth notch 106d. The openings of the first opening 108a, the second opening 108b, the third opening 108c, and the fourth opening 108d have, for example, a rectangular shape.

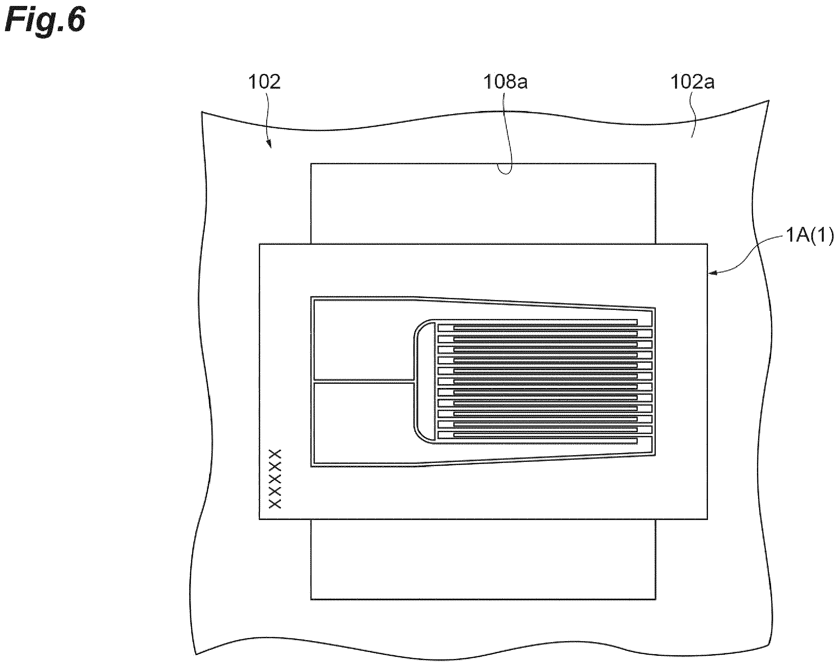

As illustrated in FIG. 4, a strain gauge component 1A (1) is disposed on the side surface 102a of the strain body 102. The strain gauge component 1A is disposed at the first notch 106a on the side surface 102a. As illustrated in FIG. 6, the strain gauge component 1A is disposed across the first opening 108a. That is, in the strain gauge component 1A, an entire surface of the main surface 3b of the substrate 3 is not in contact with the side surface 102a (a part of the main surface 3b is in contact with the side surface 102a), and both ends thereof are supported by the strain body 102. Thus, the first opening 108a opens toward the substrate 3 of the strain gauge component 1A. The strain gauge component 1A is joined to the strain body 102. Various methods can be adopted for joining the strain gauge component 1A and the strain body 102. The strain gauge component 1A and the strain body 102 can be joined by, for example, welding, an adhesive, diffusion joining, or the like.

As illustrated in FIG. 4, a strain gauge component 1B (1) is disposed on the side surface 102a of the strain body 102. The strain gauge component 1B is disposed at the second notch 106b on the side surface 102a. The strain gauge component 1B is disposed across the second opening 108b. A strain gauge component 1C (1) is disposed on the side surface 102b of the strain body 102. The strain gauge component 1C is disposed at the third notch 106c on the side surface 102b. The strain gauge component 1C is disposed across the third opening 108c. A strain gauge component 1D (1) is disposed on the side surface 102b of the strain body 102. The strain gauge component 1D is disposed at the fourth notch 106d on the side surface 102b. The strain gauge component 1D is disposed across the fourth opening 108d.

Subsequently, a method for manufacturing the strain gauge component 1 will be described.

First, the strain gauge 2 is prepared. The strain gauge 2 is manufactured by forming the resistor 5 on the main surface 4a of the insulator 4 by, for example, the photolithography method. Subsequently, the strain gauge 2 is bonded to the substrate 3. Specifically, a thermosetting adhesive is applied between the main surface 4b of the insulator 4 of the strain gauge 2 and the main surface 3a of the substrate 3, and the heat treatment is performed. A temperature of the heat treatment is, for example, about 100°C to 200°C. By the heat treatment, the thermosetting adhesive is cured, and the bonding portion 6 is formed between the substrate 3 and the insulator 4. Thus, the substrate 3 and the insulator 4 are bonded to each other.

Subsequently, a temperature characteristic of the strain gauge 2 is measured using a measuring instrument (a multimeter). Specifically, the resistance value of the strain gauge 2 at a predetermined temperature is measured. The predetermined temperature is a low temperature (for example, 0°C), a reference temperature (for example, 20°C), and a high temperature (for example, 40°C). Subsequently, a resistance temperature coefficient is determined on the basis of a measured resistance value of the strain gauge 2. Then, the resistance temperature coefficient and the characteristic information M are associated with each other, and the characteristic information M is provided on the main surface 4a of the insulator 4. As described above, the strain gauge component 1 is manufactured.

Subsequently, a method for manufacturing the load cell 100 will be described.

In the method for manufacturing the load cell 100, the strain body 102 and the plurality of strain gauge components 1 are prepared. In the present embodiment, four strain gauge components 1 are attached to the strain body 102. The four strain gauge components 1 are selected so that a difference in resistance temperature coefficient of the strain gauge components is a predetermined value. In the present embodiment, the four strain gauge components 1 are selected such that the difference in resistance temperature coefficient of the four strain gauge components 1 is 0.5 ppm/°C. Selection of the strain gauge components 1 is performed on the basis of the characteristic information M. The temperature characteristics (resistance temperature coefficients) of the strain gauge components 1 are obtained on the basis of the characteristic information M of the strain gauge components 1. The four strain gauge components 1 having the difference in resistance temperature coefficient of 0.5 ppm/°C are selected on the basis of the obtained temperature characteristics. The selection of the strain gauge components 1 may be performed in advance before manufacturing the load cell 100.

Subsequently, the four strain gauge components 1 are attached to the strain body 102. Specifically, the strain gauge components 1 are attached to the strain body 102 such that the substrates 3 of the strain gauge components 1 are respectively arranged across the first opening 108a, the second opening 108b, the third opening 108c, and the fourth opening 108d. The strain gauge component 1 may be, for example, joined to the strain body 102 by welding or joined to the strain body 102 by the adhesive. As described above, the load cell 100 is manufactured.

Manufacturing of the load cell 100 may be performed by an operator or may be performed by a work device such as a robot.

As described above, in the strain gauge component 1 according to the present embodiment, the substrate 3 on which the strain gauge 2 is disposed is formed of a metal containing aluminum or stainless steel having the same properties as the strain body 102. As described above, in the strain gauge component 1, since the strain gauge 2 is disposed on the substrate 3 formed of a metal having the same properties as the strain body 102, a change in temperature characteristic is small before and after the strain gauge component 1 is attached to the strain body 102. Therefore, by obtaining the temperature characteristic of the strain gauge 2 is obtained, and for example, selecting a plurality of strain gauge components 1 having the same temperature characteristic (the resistance temperature coefficient is within a predetermined range) and attaching them to the strain body 102, the temperature characteristic of the strain gauge 2 in the load cell 100 can be equivalent. Thus, in the manufacturing process of the load cell 100, the step for compensating for the temperature influence on zero point can be omitted. Therefore, the strain gauge component 1 can simplify the manufacturing process of the load cell 100 having excellent temperature characteristic.

In the strain gauge component 1 according to the present embodiment, the insulator 4 of the strain gauge 2 is provided with the characteristic information M capable of obtaining information on the temperature characteristic of the strain gauge 2. In this configuration, the temperature characteristic of the strain gauge component 1 can be easily obtained and checked (recognized). Therefore, for example, it is possible to easily select the plurality of strain gauge components 1 having the same temperature characteristic and attach them to the load cell 100. In addition, a robot or the like can obtain the characteristic information M of the strain gauge component 1 with a camera or the like, and the robot can select a plurality of appropriate strain gauge components 1 on the basis of the characteristic information M and attach them to the strain body 102. Therefore, the manufacturing of the load cell 100 can be automated.

The strain gauge component 1 according to the present embodiment includes the bonding portion 6 disposed between the insulator 4 of the strain gauge 2 and the substrate 3 and cured by heat treatment. One of factors that change the temperature characteristic in the strain gauge 2 is that when the strain gauge 2 is bonded to the substrate 3, the strain gauge 2 is changed by linear expansion from the substrate 3. In the strain gauge component 1, the bonding portion 6 for bonding the insulator 4 and the substrate 3 is cured by heat treatment, that is, in the strain gauge component 1, the strain gauge 2 and the substrate 3 has been already bonded and subjected to heat treatment. Therefore, it is possible to suppress a change in the temperature characteristic of the strain gauge 2 in the strain gauge component 1.

The load cell 100 according to the present embodiment has the first opening 108a, the second opening 108b, the third opening 108c, and the fourth opening 108d that open toward the substrate 3 at a position where the strain gauge component 1 is disposed. When there is a portion where the strain body 102 and the substrate 3 are not sufficiently joined between the strain body 102 and the substrate 3, friction may occur in the portion. When the friction occurs between the strain body 102 and the substrate 3, the deformation of the strain body 102 is not accurately reflected on the resistor 5, which affects an output of the resistor 5, and accurate measurement may not be performed. In the load cell 100, the substrates 3 of the strain gauge components 1 are respectively arranged across the first opening 108a, the second opening 108b, the third opening 108c, and the fourth opening 108d. Thus, a joint area between the strain body 102 and the substrate 3 is reduced, so that the portion where the strain body 102 and the substrate 3 are not sufficiently joined can be reduced (eliminated). Therefore, in the load cell 100, it is possible to suppress occurrence of the friction between the strain body 102 and the substrate 3, so that the accurate measurement can be performed.

In the load cell 100 according to the present embodiment, the plurality of strain gauge components 1 (1A, 1B, 1C, and 1D) are attached to the strain body 102. The difference in resistance temperature coefficient of the plurality of strain gauge components 1 is 0.5 ppm/°C. In this configuration, the load cell 100 having excellent temperature characteristic can be obtained.

Although the embodiment of the present invention has been described above, the present invention is not necessarily limited to the above-described embodiment, and various modifications can be made without departing from the gist of the present invention.

In the above embodiment, a mode in which the insulator 4 is formed of polyimide has been described as an example. However, the insulator 4 may be formed of a resin. As the resin, for example, polyamideimide (PAI), polyethylene (PE), polyetheretherketone, a liquid crystal polymer, or the like can be used.

In the above embodiment, a mode in which the characteristic information M is provided on the insulator 4 has been described as an example. However, the characteristic information M may be provided on the substrate 3 or may be provided on both the substrate 3 and the insulator 4.

In the above embodiment, a mode in which the first opening 108a, the second opening 108b, the third opening 108c, and the fourth opening 108d of the strain body 102 are formed to penetrate the side surfaces 102a and 102b and the penetrating portion 104 has been described as an example. However, the first opening 108a, the second opening 108b, the third opening 108c, and the fourth opening 108d may have a bottomed structure (a recess).

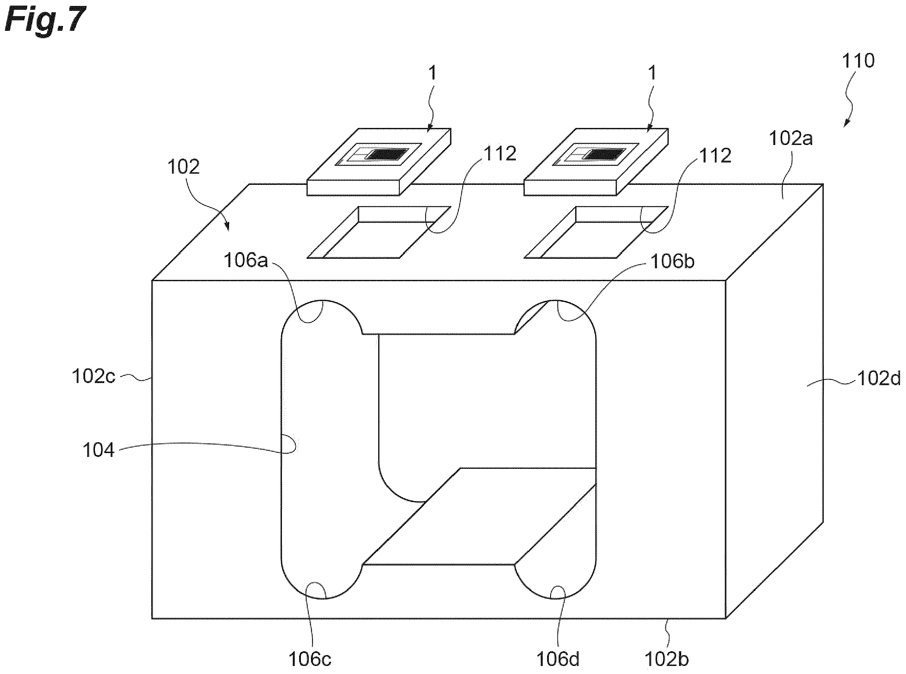

In the above embodiment, a mode in which the strain body 102 has the first opening 108a, the second opening 108b, the third opening 108c, and the fourth opening 108d, and the strain gauge components 1 are respectively arranged across the first opening 108a, the second opening 108b, the third opening 108c, and the fourth opening 108d has been described as an example. However, as illustrated in FIG. 7, in the load cell 110, the strain gauge components 1 may be arranged (accommodated) in recesses 112 of the strain body 102. The recesses 112 are arranged at positions corresponding to the first notch 106a, the second notch 106b, the third notch 106c, and the fourth notch 106d. The recess 112 is formed to have the same size as the substrate 3. A depth of the recess 112 is, for example, equal to the thickness of the substrate 3. In this configuration, the strain gauge component 1 can be easily attached in the strain body 102.

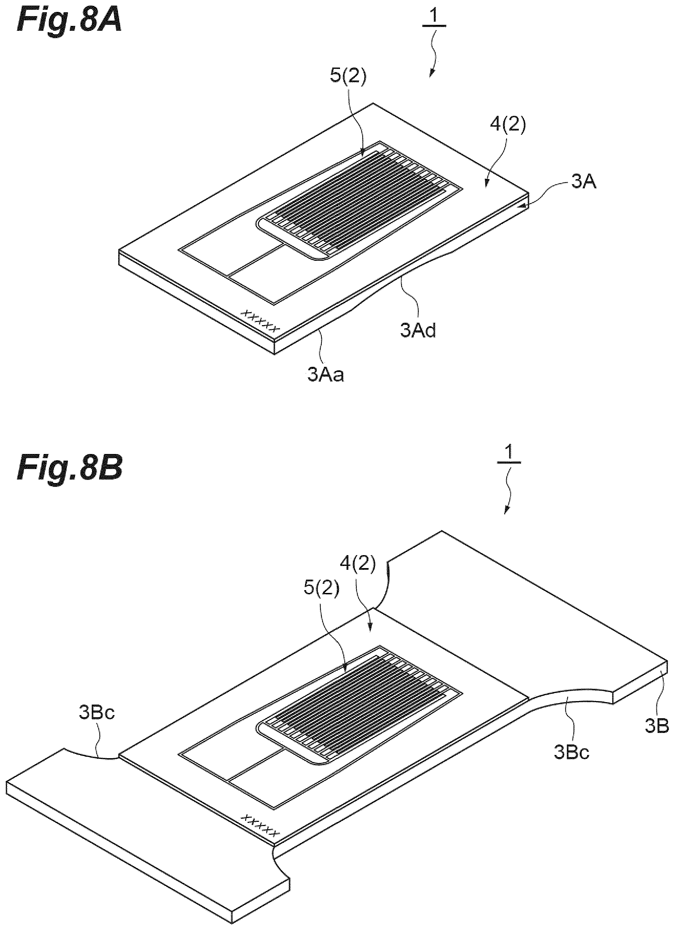

In the above embodiment, a mode in which the main surface 3b of the substrate 3 of the strain gauge component 1 is the flat surface has been described as an example. However, as illustrated in FIG. 8A, a recess 3Ad may be formed in a main surface 3Aa of a substrate 3A. That is, a part of the main surface 3Aa may be a curved surface. Further, in the above embodiment, a mode in which the substrate 3 has a rectangular shape has been described as an example. However, as illustrated in FIG. 8B, a substrate 3B may have a shape in which both ends are enlarged in a substantially trapezoidal shape. In this configuration, a constricted portion 3Bc is provided in the substrate 3B.

## Claims

1. A strain gauge component configured to be attached to a strain body that deforms when a load is applied to the strain body, the strain gauge component comprising:
a strain gauge including an insulator having an insulating property and a resistor disposed on the insulator and having an electric resistance value varying with deformation of the strain body; and
a substrate on which the insulator of the strain gauge is disposed, wherein
the substrate is formed of a metal containing aluminum or stainless steel.

2. The strain gauge component according to claim 1, wherein the insulator or the substrate is provided with a mark capable of obtaining information on temperature characteristic of the strain gauge.

3. The strain gauge component according to claim 1 or 2, further comprising a bonding portion disposed between the insulator and the substrate.

4. The strain gauge component according to claim 3, wherein the bonding portion is cured by heat treatment.

5. A load cell comprising:
the strain gauge component according to any one of claims 1 to 4; and
a strain body to which the strain gauge component is attached, the strain body being formed of a metal containing aluminum or stainless steel and configured to deform when a load is applied to the strain body.

6. The load cell according to claim 5, wherein the strain body has a recess in which the substrate is accommodated at a position where the strain gauge component is disposed.

7. The load cell according to claim 5, wherein the strain body has an opening that opens toward the substrate at a position where the strain gauge component is disposed.

8. The load cell according to any one of claims 5 to 6, wherein
a plurality of the strain gauge components are attached to the strain body, and
a difference in resistance temperature coefficient of the plurality of strain gauge components is 0.5 ppm/°C.

9. A method for manufacturing a load cell having a strain gauge including an insulator having an insulating property and a resistor disposed on the insulator and having an electric resistance value varying with deformation of a strain body when a load is applied to the strain body; a substrate formed of a metal containing aluminum or stainless steel; and a strain body that is deformed when a load is applied to the strain body and is formed of a metal containing aluminum or stainless steel, the method comprising:
bonding the strain gauge to the substrate to produce a strain gauge component;
heating the strain gauge component; and
joining the strain gauge component to the strain body.
